# EUROPEAN PATENT APPLICATION

(11) **EP 4 850 527 A1**
(43) Date of publication of application: **09.12.2026**
(21) Application number: 25748214.1
(22) Date of filing: 20.01.2025
(51) Int. Cl.: A01K 63/00

(54) **WATER TANK FOR REARING LARVAL FISH AND REARING DEVICE FOR LARVAL FISH**

(30) Priority: 30.01.2024 JP 2024012060
(71) Applicant: The National Research And Development Agency, Japan Fisheries Research and Education Agency, Yokohama-shi, Kanagawa 221-8529 (JP)
(72) Inventor: UEZUMIYA Keisuke, Osaka shi, Osaka 530-0013 (JP); SUDO Ryusuke, Yokohama-shi, Kanagawa 221-8529 (JP); YATABE Takashi, Yokohama-shi, Kanagawa 221-8529 (JP); SATOMI Masataka, Yokohama-shi, Kanagawa 221-8529 (JP); TAKASAKI Ryutaro, Yokohama-shi, Kanagawa 221-8529 (JP)
(74) Representative: Sekiguchi, Kazuya
(86) International application number: PCT/JP2025/001569
(87) International publication number: WO 2025/164405

(57) **Abstract**

A water tank for rearing larval fish includes: a flat-surface portion that expands in a lateral direction; a pair of curved-surface portions that are coupled to one end portion and another end portion in the lateral direction of the flat-surface portion, and that extend upward while bulging to sides opposite to each other in the lateral direction; and a pair of side-surface portions that are coupled respectively to the pair of curved-surface portions, and that extend upward. The water tank satisfies 1.12≤W/H≤1.90, where W (mm) is an interval in the lateral direction between respective upper edges of the pair of side-surface portions, and where H (mm) is a height from the flat-surface portion to the respective upper edges of the pair of side-surface portions.

## Description

### Technical Field

The present invention relates to water tanks for rearing larval fish, and to apparatuses for rearing larval fish, the apparatuses including the water tanks.

### Background Art

Hitherto, water tanks for rearing larvae of eels have been proposed. For example, Patent Document 1 discloses a water tank having a semi-cylindrical bottom surface (Length: 1800 mm × Width: 800 mm × Height: 800 mm).

### Citation List

### Patent Literature

Patent Document 1: WO 2015/093616

### Summary of Invention

### Technical Problem

In the water tank disclosed in Patent Document 1, the bottom surface is constituted by a continuous concave curved surface, and a lowermost part of the bottom surface protrudes downward. Such a shape of the bottom surface causes feed that is supplied into the water tank at the time of feeding larval fish in the water tank to concentrate at a curved part (lower end portion) of the bottom surface of the water tank. As a result, a feeding area is narrowed, and it is difficult to efficiently feed the large number of larval fish in the water tank. Thus, the water tank disclosed in Patent Document 1 has room for improvement from a viewpoint of increasing the number of larval fish to be reared, that is, the number of larval fish to be produced per unit volume of water (i.e., production efficiency).

In addition, when the larval fish remain in a vicinity of the bottom surface of the water tank even after feeding, the larval fish may rub their heads against the bottom surface of the water tank to develop their jaw dislocations. In order to mitigate such a phenomenon, after feeding, it is necessary to drive away the larval fish remaining in the vicinity of the bottom surface from the vicinity of the bottom surface by using water currents that flow at an appropriate rate. Meanwhile, if the water currents are excessively fast, the larval fish are liable to develop deformities such as broken spines. From a viewpoint of facilitating water-introduction control, at a constant rate of introduction of water into the water tank (amount of water to be introduced per predetermined period of time), in order to reduce the development of the abnormalities (such as dislocations and deformities) of the larval fish, it is necessary to appropriately design the shape of the water tank so that the water currents flow at the appropriate rate along inner surfaces (including the bottom surface) of the water tank. The shape of the water tank disclosed in Patent Document 1 is not designed in consideration of reducing the development of the abnormalities of the larval fish, which is another area that could be improved.

The present invention has been made to solve the problems as described above, and an object thereof is to provide a water tank for rearing larval fish, the water tank having an appropriately designed shape, and to provide an apparatus for rearing larval fish, the apparatus including the water tank, the apparatus and the water tank allowing an increase in the number of larval fish to be reared (production efficiency) while reducing development of abnormalities (such as dislocations and deformities) of the larval fish.

### Solution to Problem

According to an aspect of the present invention, there is provided a water tank for rearing larval fish, the water tank including:
a flat-surface portion that expands in a lateral direction;
a pair of curved-surface portions that are coupled to one end portion and another end portion in the lateral direction of the flat-surface portion, and that extend upward while bulging to sides opposite to each other in the lateral direction; and
a pair of side-surface portions that are coupled respectively to the pair of curved-surface portions, and that extend upward,
the water tank satisfying $1.12 \leq W / H \leq 1.90$ (1)
where W (mm) is an interval in the lateral direction between respective upper edges of the pair of side-surface portions, and
where H (mm) is a height from the flat-surface portion to the respective upper edges of the pair of side-surface portions.

According to another aspect of the present invention, there is provided an apparatus for rearing larval fish, the apparatus including:
the water tank;
an inlet portion that is configured to introduce water into the water tank; and
a drainage portion that is configured to drain the water which has been introduced into the water tank and has exceeded a predetermined capacity of the water tank.

According to a still another aspect of the present invention, there is provided an apparatus for rearing larval fish, the apparatus including:
the water tank;
an inlet portion that is configured to introduce water into the water tank; and
a drainage portion that is configured to drain the water which has been introduced into the water tank and has exceeded a predetermined capacity of the water tank,
the inlet portion including an inlet pipe that extends in a longitudinal direction of the water tank,
the inlet pipe including a plurality of inlet ports that are formed in a row in the longitudinal direction,
the drainage portion including drainage portions that are fewer in number than the plurality of inlet ports and are arranged side by side in the longitudinal direction.

### Advantageous Effects of Invention

It is possible to increase the number of larval fish to be reared (production efficiency) while reducing development of abnormalities (such as dislocations and deformities) of the larval fish.

### Brief Description of Drawings

[FIG. 1] A perspective view illustrating a schematic configuration of an apparatus for rearing larval fish according to an embodiment of the present invention.
[FIG. 2] A plan view illustrating schematic configurations of an inlet portion and drainage portions of a water tank provided to the rearing apparatus.
[FIG. 3] A front view illustrating a configuration of a vicinity of the drainage portion of the water tank.
[FIG. 4] A cross-sectional view of the water tank along a plane that is perpendicular to its longitudinal direction.
[FIG. 5] A cross-sectional view illustrating another configuration of the water tank.
[FIG. 6] A cross-sectional view illustrating a still another configuration of the water tank.
[FIG. 7] A cross-sectional view illustrating a configuration of a water tank according to Comparative Example.
[FIG. 8] A graph schematically showing growth of larval fish by days of age in a case where the larval fish are reared in semi-cylindrical tanks with different lengths.
[FIG. 9] A graph schematically showing growth of larval fish by days of age in a case where the larval fish are reared in Kreisel tanks with different diameters.
[FIG. 10] A schematic explanatory view illustrating distributions of water currents in respective water tanks according to Examples and Comparative Example in cross-sections that are perpendicular to the longitudinal direction.
[FIG. 11] A schematic explanatory view illustrating the distributions of the water currents in the longitudinal direction in the respective water tanks according to Examples.
[FIG. 12] A schematic explanatory view illustrating the distributions of the water currents in the longitudinal direction in the respective water tanks according to Example and Comparative Example.

### Description of Embodiments

An embodiment of the present invention is described hereinbelow with reference to the drawings.

### [1. Rearing Apparatus]

### (1-1. Overview of Rearing Apparatus)

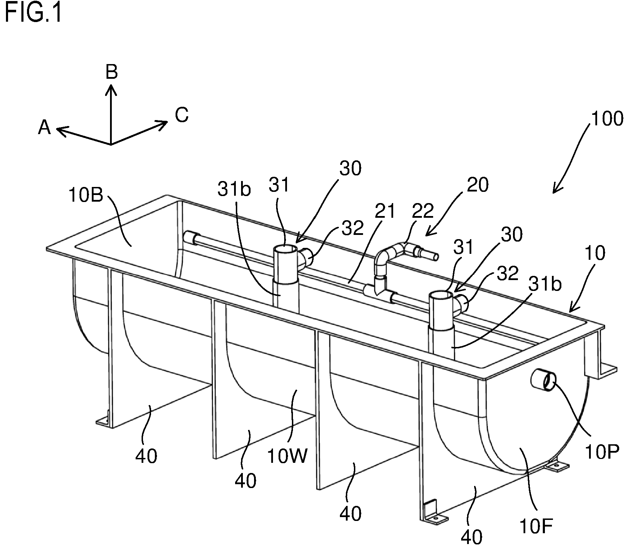

FIG. 1 is a perspective view illustrating a schematic configuration of an apparatus 100 for rearing larval fish according to this embodiment. This rearing apparatus 100 includes a water tank 10, an inlet portion 20, and drainage portions 30. In this embodiment, larvae of eels are exemplified as the larval fish being objects to be reared. Note that, the rearing apparatus 100 according to this embodiment is applicable also to rearing of larvae other than those of eels.

The water tank 10 has an elongated shape that is substantially U-shape in cross-section and is extended in one direction. Hereinbelow, for the sake of convenience of description, directions are defined as follows. First, the one direction in which the water tank 10 extends (longitudinal direction and depth direction) is defined as an A direction. In addition, two directions that are perpendicular to each other in cross-section which is perpendicular to the A direction are defined as a B direction and a C direction, respectively. The B direction is a height direction of the water tank 10, that is, an upper-and-lower direction. The C direction is a lateral direction (width direction) of the water tank 10.

The water tank 10 includes a wall portion 10W having a shape that is opened on its upper side and concaved on its lower side. The wall portion 10W is formed to extend in the A direction, and couples a front wall portion 10F and a rear wall portion 10B to each other. The front wall portion 10F and the rear wall portion 10B are located on sides opposite to each other in the A direction. The water tank 10 is installed at a predetermined position with the wall portion 10W supported by a plurality of ribs 40. Note that, further details of the water tank 10 are described below.

Rearing water is supplied into the water tank 10 through the inlet portion 20. The rearing water is, for example, seawater. Hereinbelow, the rearing water is simply referred to as "water." The larval fish are introduced into the water tank 10, and fed periodically. With this, the larval fish are reared in the water tank 10. At the time of feeding, introduction of the water through the inlet portion 20 is stopped, and the introduction of the water is resumed after the feeding. By the introduction of the water through the inlet portion 20, the water fills the water tank 10 up to a predetermined capacity. Water that has exceeded the predetermined capacity (overflow water) by the introduction of the water is drained through the drainage portions 30.

In such a way, the rearing apparatus 100 includes the water tank 10 for rearing larval fish, the inlet portion 20 that introduces water into the water tank 10, and the drainage portions 30 that drain the water which has been introduced into the water tank 10 and has exceeded the predetermined capacity of the water tank 10. This configuration allows the introduction of the water through the inlet portion 20 and the drainage through the drainage portions 30 to be performed together. With this, appropriate water currents can be generated in the water tank 10. Thus, in terms of generating favorable flow fields for the larval fish in the water tank 10, it can be said that the rearing apparatus 100 desirably has the above-described configuration.

Feeding is performed, for example, as follows. A feeding pipe is inserted from above toward a bottom surface of the water tank 10, and sets (applies) feed to the bottom surface through the feeding pipe. When an illumination apparatus arranged above the water tank 10 is turned on, the larval fish move (swim) in a direction opposite to that to the illumination apparatus due to their natural behavior (negative phototaxis). In other words, the larval fish move in the water tank 10 from its upper side to the bottom surface of the water tank 10. When the larval fish reach the feed set to the bottom surface, the larval fish ingest the feed. Such feeding is performed, for example, five times a day at two-hour intervals. A frequency of the feeding may be adjusted as appropriate depending, for example, on types of the larval fish and breeding seasons.

When the feed remains on the bottom surface of the water tank 10, the bottom surface of the water tank 10 and the water in the water tank 10 are liable to foul. As a result, bacteria are liable to proliferate in the water tank 10. The larval fish are susceptible to the bacteria, and hence the water tank 10 needs to be periodically cleaned. Thus, a water change where, for example, two water tanks 10 are provided side by side, and larval fish in one of the water tanks 10 are moved into another one of the water tank 10 is periodically performed (e.g., every other day). Such a water change allows the larval fish to continue to be reared in the other one of the water tanks 10 even while the one of the water tanks 10 is being cleaned. Note that, the water change may be performed, for example, by utilizing the siphon principle, specifically, by transferring water in the one of the water tanks 10 to the other one of the water tanks 10 through a hose that couples connection ports 10P provided through the front wall portions 10F of the two water tanks 10 to each other.

### (1-2. Details of Inlet Portion and Drainage Portions)

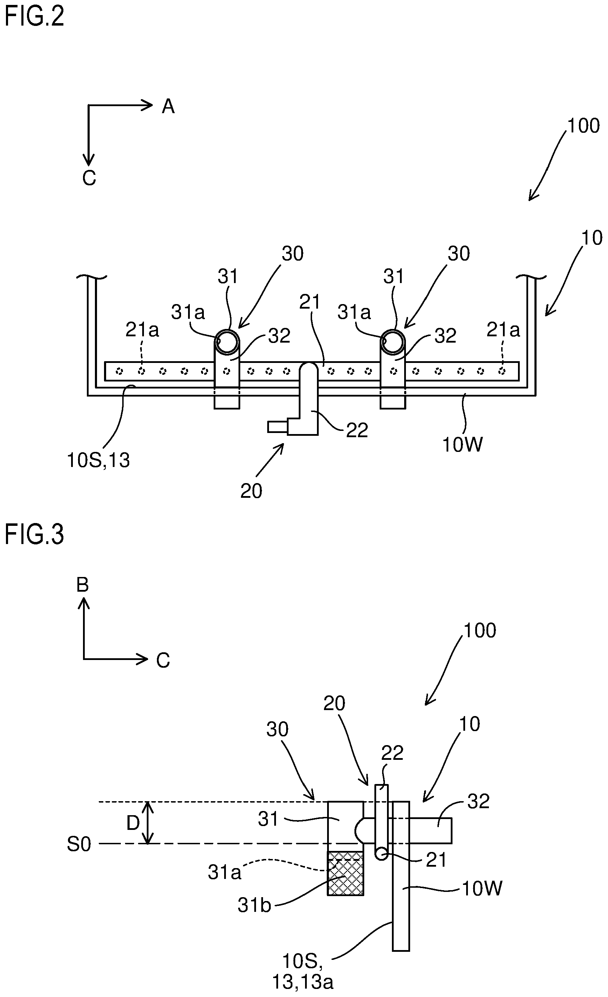

FIG. 2 is a plan view illustrating schematic configurations of the inlet portion 20 and the drainage portions 30 of the water tank 10. The inlet portion 20 introduces the water into the water tank 10. Such an inlet portion 20 includes an inlet pipe 21 and a connection pipe 22. The inlet pipe 21 is a pipe that extends in the A direction, that is, in the longitudinal direction of the water tank 10.

The inlet pipe 21 includes a plurality of inlet ports 21a. The inlet ports 21a are formed in a row in the A direction through a lower end portion of an outer peripheral surface of the inlet pipe 21. In this embodiment, the inlet ports 21a include nine inlet ports 21a on each of one side and another side in the A direction relative to a central portion of the inlet pipe 21. In other words, the number of the inlet ports 21a is eighteen in total. Note that, the number of the inlet ports 21a is not limited to eighteen, and different numbers of the inlet ports 21a may be provided.

The connection pipe 22 is connected to a point around a center in the A direction of the inlet pipe 21. An end portion of the connection pipe 22 on a side opposite to that of the inlet pipe 21 is connected to a water supply pump via a connection hose.

Water that is supplied from the water supply pump and flows through the connection pipe 22 branches at a portion connected to the inlet pipe 21, and flows to the sides opposite to each other in the A direction. Then, the water is supplied (introduced) into the water tank 10 through the inlet ports 21a arrayed in the A direction.

The two drainage portions 30 are provided at an interval in the A direction. The two drainage portions 30 are located on the sides opposite to each other in the A direction relative to the central portion of the inlet pipe 21, and are located equidistant from the central portion of the inlet pipe 21. In other words, in the A direction, the two drainage portions 30 are arranged at symmetrical positions relative to the central portion of the inlet pipe 21. Note that, the number of the drainage portions 30 is not limited to two as described above, and may be one, or may be three or more.

FIG. 3 is a front view illustrating a configuration of a vicinity of the drainage portion 30 of the water tank 10. The drainage portion 30 includes a drainage pipe portion 31 and a main body portion 32. The drainage pipe portion 31 is a cylindrical body that extends in the B direction. An intake port 31a into which the water in the water tank 10 flows is located at a lower end portion of the drainage pipe portion 31. The drainage pipe portion 31 is fixed to the water tank 10 via the main body portion 32 so that the intake port 31a is located below a position S0 that is a position of a water surface under the state in which the water has filled the water tank 10 up to the predetermined capacity. Note that, the above-described inlet pipe 21 of the inlet portion 20 is also located below the position S0.

A strainer 31b is attached to the drainage pipe portion 31. The strainer 31b is a mesh-like member, and is provided to surround the intake port 31a. The strainer 31b prevents the larval fish in the water tank 10 from entering the intake port 31a.

The main body portion 32 extends in the C direction, and communicates with the drainage pipe portion 31. The main body portion 32 is provided through the wall portion 10W of the water tank 10. The main body portion 32 is fixed to the wall portion 10W of the water tank 10 so that its lowermost part is located at the same position as that of the position S0, or located below the position S0.

The water in the water tank 10 enters the intake port 31a through a mesh part (apertures) of the strainer 31b, and enters an inside of the drainage pipe portion 31. When water that exceeds the predetermined capacity is introduced into the water tank 10 through the inlet portion 20, a level of the water in the drainage pipe portion 31 should rise above the position S0. Since the drainage pipe portion 31 communicates with the main body portion 32, the water above the position S0 flows into the main body portion 32, and is drained to an outside of the water tank 10.

In this embodiment, the two drainage portions 30 are fewer in number than the (e.g., eighteen) inlet ports 21a of the inlet portion 20. In this case, currents of the water that is introduced through the inlet ports 21a and flows in the water tank 10 toward the drainage portions 30 can be spread in the A direction. Thus, from a viewpoint of generating the favorable flow fields for the larval fish in the water tank 10, the drainage portions 30 fewer in number than the inlet ports 21a are desirably arranged side by side in the A direction.

In addition, in order to ensure that the favorable flow fields for the larval fish are generated in the water tank 10, distributions of flow paths of the water that flows in the water tank 10 are desirably as symmetrical as possible in the A direction. In this regard, as illustrated in FIG. 2, the inlet ports 21a and the drainage portions 30 are desirably arranged in symmetry in the A direction relative to the central portion in the A direction.

### [2. Details of Water Tank]

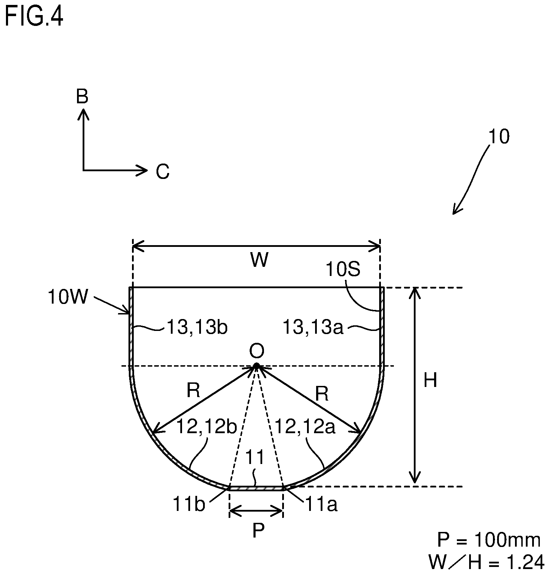

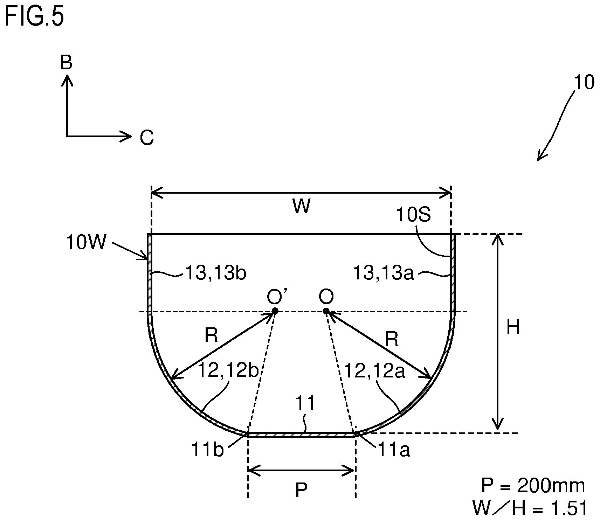

FIG. 4 is a cross-sectional view of the above-described water tank 10. Note that, FIG. 4 illustrates a cross-section of the water tank 10 along a plane that is perpendicular to the A direction. In addition, in FIG. 4, for the sake of convenience, illustration of the inlet portion 20 and the drainage portions 30 described above is omitted. Such illustration (illustration in cross-section) applies also to subsequent FIG. 5 to FIG. 7.

The water tank 10 includes a flat-surface portion 11, curved-surface portions 12, and side-surface portions 13. The flat-surface portion 11, the curved-surface portions 12, and the side-surface portions 13 are formed on an inner surface 10S of the wall portion 10W of the water tank 10. In this embodiment, since the water tank 10 has the elongated shape in the A direction as described above, the flat-surface portion 11, the curved-surface portions 12, and the side-surface portions 13 also have an elongated shape in the A direction.

The flat-surface portion 11 is located to expand in the C direction at a lowermost part of the inner surface 10S of the water tank 10. The curved-surface portions 12 are provided in a pair on both sides in the C direction relative to the flat-surface portion 11. More specifically, the curved-surface portions 12 are coupled to one end portion 11a and another end portion 11b in the C direction of the flat-surface portion 11, and extend upward while bulging to sides opposite to each other in the C direction.

Note that, in the following description, in order that the pair of curved-surface portions 12 are distinguished from each other, the curved-surface portion 12 that is coupled to the one end portion 11a in the C direction of the flat-surface portion 11 is referred to as a first curved-surface portion 12a. Similarly, the curved-surface portion 12 that is coupled to the other end portion 11b in the C direction of the flat-surface portion 11 is referred to as a second curved-surface portion 12b. The first curved-surface portion 12a and the second curved-surface portion 12b are each curved into a shape protruding from the inside to the outside of the water tank 10 in the cross-section of FIG. 4. Thus, an interval in the C direction between the first curved-surface portion 12a and the second curved-surface portion 12b increases from a side where the curved-surface portions 12 are coupled to the flat-surface portion 11 to a side opposite thereto (upward).

In the cross-section of FIG. 4, the curved-surface portions 12 (first curved-surface portion 12a and second curved-surface portion 12b) are formed into a circular-arc shape with a uniform radius of curvature R (distance to center of curvature O). Note that, the curved-surface portions 12 may be formed into a curved-surface shape other than the circular-arc shape (such as a shape in which the radius of curvature R changes partway).

The side-surface portions 13 are coupled respectively to the pair of curved-surface portions 12, and extend upward. Thus, the side-surface portions 13 are provided in a pair to correspond respectively to the pair of curved-surface portions 12. Note that, of the pair of side-surface portions 13, the side-surface portion 13 that is coupled to the first curved-surface portion 12a is referred to also as a first side-surface portion 13a, and the side-surface portion 13 that is coupled to the second curved-surface portion 12b is referred to also as a second side-surface portion 13b. Put another way, in this case, the first side-surface portion 13a is coupled to the first curved-surface portion 12a, and extends upward. Similarly, put another way, the second side-surface portion 13b is coupled to the second curved-surface portion 12b, and extends upward. In this embodiment, the first side-surface portion 13a and the second side-surface portion 13b are located parallel to each other. In other words, an interval in the C direction between the first side-surface portion 13a and the second side-surface portion 13b is uniform.

As illustrated in FIG. 4, an interval in the C direction between respective upper edges of the pair of side-surface portions 13, that is, of the first side-surface portion 13a and the second side-surface portion 13b is defined as W (mm). In addition, a distance from the flat-surface portion 11 to the respective upper edges of the pair of side-surface portions 13 is defined as H (mm). In this case, the water tank 10 according to this embodiment satisfies the following conditional expression (1). Note that, put another way, the above-described W is a width of the water tank 10. In addition, put another way, the above-described H is a height of the water tank 10. $1.12 \leq W / H \leq 1.90$ (1)

For example, as illustrated in FIG. 4, a width in the C direction of the flat-surface portion 11 is defined as P (mm), and P = 100 mm is adopted. In addition, R = 230 mm is adopted as the radius of curvature R of the first curved-surface portion 12a and the second curved-surface portion 12b. The water tank 10 designed with W = 460 mm and H = 370 mm gives W/H=1.24. Thus, with this design, the water tank 10 that satisfies the conditional expression (1) can be achieved.

FIG. 5 is a cross-sectional view illustrating another configuration of the water tank 10. This configuration of the water tank 10 illustrated in FIG. 5 is different from that of the water tank 10 illustrated in FIG. 4 in that P and W are changed to P = 200 mm and W = 560 mm (R and H are the same as those in FIG. 4, and a center of curvature relative to R is defined as O or O'). The water tank 10 illustrated in FIG. 5 gives W/H=1.51. Thus, also with the design illustrated in FIG. 5, the water tank 10 that satisfies the conditional expression (1) can be achieved.

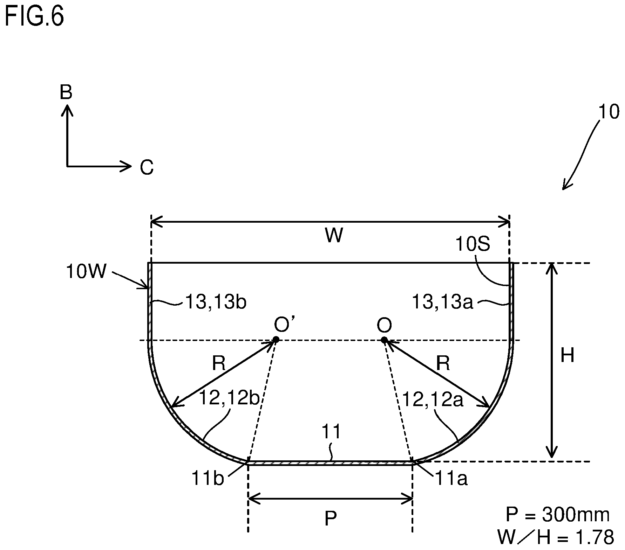

FIG. 6 is a cross-sectional view illustrating a still another configuration of the water tank 10. This configuration of the water tank 10 illustrated in FIG. 6 is different from that of the water tank 10 illustrated in FIG. 4 in that P and W are changed to P = 300 mm and W = 660 mm (R and H are the same as those in FIG. 4). The water tank 10 illustrated in FIG. 6 gives W/H=1.78. Thus, also with the design illustrated in FIG. 6, the water tank 10 that satisfies the conditional expression (1) can be achieved.

In the configurations of the water tank 10 illustrated in FIG. 4 to FIG. 6, that is, in the configurations of the water tank 10, in which the pair of curved-surface portions 12 (first curved-surface portion 12a and second curved-surface portion 12b) are coupled respectively to both the ends in the C direction of the flat-surface portion 11, and in which the side-surface portions 13 (first side-surface portion 13a and second side-surface portion 13b) are coupled respectively to the curved-surface portions 12 and extend upward, the flat-surface portion 11 is located at the bottom surface of the water tank 10. In this case, at the time of feeding the larval fish in the water tank 10, feed can be arranged on the flat-surface portion 11. With this, a feeding area can be expanded in the C direction. Thus, unlike, for example, related-art water tanks without the flat-surface portion 11 (water tank with a simple concave shape in cross-section), the arranged feed does not concentrate in a narrow range in the lowermost part of the bottom surface. As a result, merely by slightly expanding the water tank 10 in the C direction (without expanding the water tank 10 more than necessary), a large number of larval fish can be efficiently fed, and hence the number of larval fish to be reared (production efficiency) can be increased.

Further, since the values of W/H fall within the range that satisfies the conditional expression (1), water currents at appropriate flow rates can be generated in the water tank 10. For example, after feeding, water is introduced downward at a predetermined flow rate from a vicinity of the side-surface portion 13 on the one side (such as first side-surface portion 13a). With this, a water current is generated along the curved-surface portion 12 on the one side (such as first curved-surface portion 12a) and the flat-surface portion 11. Thus, a water current that flows toward the curved-surface portion 12 on the other side (such as second curved-surface portion 12b) and the side-surface portion 13 on the other side (such as second side-surface portion 13b) can be generated at an appropriate flow rate. In this way, larval fish remaining in a vicinity of the flat-surface portion 11 even after feeding can be driven away toward the side-surface portion 13 on the other side (such as second side-surface portion 13b), and can be allowed to appropriately swim in the water tank 10. Thus, it is possible to mitigate the phenomenon that the larval fish rub their heads against the bottom surface of the water tank 10 (such as flat-surface portion 11) after feeding to develop their jaw dislocations.

Still further, when the flow rate is excessively high, the larval fish are liable to develop abnormalities (deformities) such as broken spines. By setting the values of W/H to fall within the range that satisfies the conditional expression (1), appropriate flow rates are achieved in the water tank 10 at the time of the introduction of water. With this, it is also possible to reduce development of such abnormalities.

In other words, by providing the flat-surface portion 11 at the bottom surface of the water tank 10, and by appropriately designing the shape in cross-section of the water tank 10 (setting the range of the values of W/H) according to the conditional expression (1), development of the abnormalities (such as dislocations and deformities) of the larval fish can be reduced, and the number of larval fish to be reared can be increased.

From a viewpoint of ensuring the flow rates at which the development of the jaw dislocations and the deformities of the larval fish at the time when water is introduced into the water tank 10 after feeding can be reduced, the water tank 10 according to this embodiment desirably further satisfies the following conditional expression (1a). The water tank 10 illustrated in FIG. 4 to FIG. 6 further satisfies the conditional expression (1a), which is a desirable form. $1.24 \leq W / H \leq 1.78$ (1a)

Yet further, from a viewpoint of ensuring that the water tank 10 satisfies the conditional expression (1a), the water tank 10 according to this embodiment desirably satisfies the following conditional expression (2a). The water tank 10 illustrated in FIG. 4 to FIG. 6 further satisfies the conditional expression (2a), which is a desirable form. $100 mm \leq P \leq 300 mm$ ()2a

Incidentally, in Patent Document 1 described above, since the width of the water tank is 800 mm, and the height of the same is 800 mm, W/H=800/800=1 can be assumed. In addition, since the flat-surface portion is absent at the bottom surface of the water tank, P = 0 mm also can be assumed. In this configuration, as described above, the feed that is supplied into the water tank concentrates in the lower end portion of the bottom surface of the water tank, resulting in the narrow feeding area. Thus, it is difficult to increase the number of larval fish to be reared. When a longitudinal length of the water tank is set to be uniform, from a viewpoint of increasing the number of larval fish to be reared, it can be said that P > 0 mm is desirably adopted to provide the flat-surface portion at the bottom surface of the water tank (even a small width). In this regard, "1.12" as the lower limit of W/H, that is, a midpoint between "1" being a value of W/H in related art and "1.24" being the lower limit of the conditional expression (1a), can be assumed as a critical point at which at least advantages according to this embodiment can be achieved.

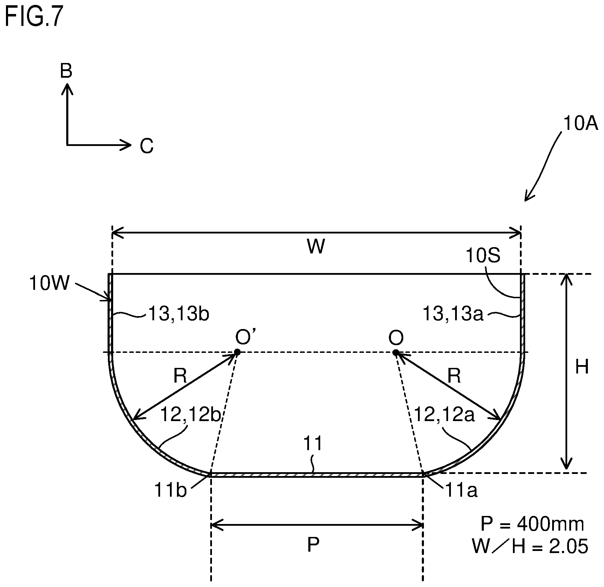

In addition, FIG. 7 is a cross-sectional view illustrating a configuration of a water tank 10A. This configuration of the water tank 10A illustrated in FIG. 7 is different from that of the water tank 10 illustrated in FIG. 4 in that P and W are changed to P = 400 mm and W = 760 mm (R and H are the same as those in FIG. 4). The water tank 10 illustrated in FIG. 7 gives W/H=2.05. In this design, the value of P representing the width of the flat-surface portion 11 of the water tank 10 is large, which is more advantageous than the configurations illustrated in FIG. 4 to FIG. 6 in expanding the feeding area. However, results of simulations described below have revealed that the excessively large width of the flat-surface portion 11 in the configuration illustrated in FIG. 7 makes it difficult, at a constant rate of introduction of water, to generate water currents at a flow rate (e.g., 0.045 m/s) that can drive away the larval fish remaining in the vicinity of the flat-surface portion 11 even after feeding. From the results, "1.90" as the upper limit of W/H, that is, a midpoint between "1.78" being the upper limit of the conditional expression (1a) and "2.05" being the value of W/H in the configuration illustrated in FIG. 7, can be assumed as a critical point at which at least the advantages according to this embodiment can be achieved.

On the basis of such an idea, the above-described conditional expression (1) is specified to define a range (the upper limit and the lower limit) of W/H.

Similarly, from a viewpoint of expanding the feeding area in the water tank 10 as much as possible, "50 mm" as a lower limit of P, that is, a midpoint between "0 mm" being a value of P in related art and "100 mm" being the lower limit of the conditional expression (2a), can be assumed as a critical point at which at least the advantages according to this embodiment can be achieved.

Further, from a viewpoint of generating the water currents at the flow rate that can drive away the larval fish remaining in the vicinity of the flat-surface portion 11 even after feeding, "350 mm" as an upper limit of P, that is, a midpoint between "300 mm" being the upper limit of the conditional expression (2a) and "400 mm" being the value of P in the configuration illustrated in FIG. 7, can be assumed as a critical point at which at least the advantages according to this embodiment can be achieved.

Therefore, from a viewpoint of ensuring that the water tank 10 satisfies the conditional expression (1), it can be said that the water tank 10 according to this embodiment desirably satisfies the following conditional expression (2). $50 mm \leq P \leq 350 mm$ (2)

Still further, as illustrated in FIG. 1, the water tank 10 according to this embodiment has the elongated shape in the A direction. Specifically, the water tank 10 has the elongated shape in the A direction that is perpendicular to a cross-section taken along a normal direction of the flat-surface portion 11 (B direction) and along the lateral direction (C direction). In this case, in accordance with a length in the A direction of the water tank 10, the number (absolute number) of larval fish to be reared can easily be increased. For example, when the length in the A direction of the water tank 10 is increased n-fold (n is a positive number greater than one), the number of larval fish to be reared can be simply increased n-fold. In other words, from the viewpoint of increasing the number of larval fish to be reared, the water tank 10 desirably has the elongated shape in the A direction as in this embodiment.

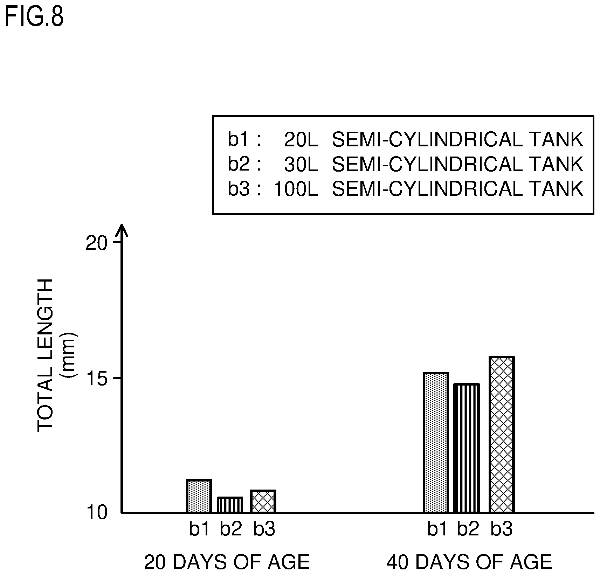

Yet further, the following investigation revealed that there were no adverse effects on growth of larval fish even when the water tank 10 was extended to any length in the A direction. FIG. 8 is a graph schematically showing growth of larval fish (distributions of total lengths of larval fish) by days of age in semi-cylindrical tanks (three different capacities of 20 L, 30 L, and 100 L). Note that, the semi-cylindrical tanks are water tanks each formed by horizontally cutting a cylinder in a plane including its central axis, the cylinder being laid on its side, and by extending its both end portions upward. The semi-cylindrical tank with the capacity of 20 L includes an opening portion with a width of 247 mm, and has a length in the A direction of 497 mm. The semi-cylindrical tank with the capacity of 30 L includes an opening portion with a width of 228 mm, and has a length in the A direction of 752 mm. The semi-cylindrical tank of 100 L includes an opening portion with a width of 230 mm, and has a length in the A direction of 2491 mm. In other words, the widths of the respective opening portions of the semi-cylindrical tanks are substantially uniform, and the lengths in the A direction of the same are different from each other.

Note that, although the water tank 10 according to this embodiment includes the flat-surface portion 11 as described above, in the investigation shown in FIG. 8, in order to examine only influence of the lengths in the A direction of the water tanks on the growth of the larval fish, that is, in order to eliminate influence of the flat-surface portion 11, the semi-cylindrical tanks without the flat-surface portions at their bottom surfaces were assumed.

The graph reveals that maximum total lengths of the larval fish increased from 20 days of age to 40 days of age regardless of which of the 20-L, the 30-L, and the 100-L semi-cylindrical tanks is used. Thus, it can be said that, even when the water tank 10 is extended in the A direction, growth of the larval fish is not adversely affected, and hence the water tank 10 may be enlarged.

The above-described curved-surface portions 12 (first curved-surface portion 12a and second curved-surface portion 12b) of the water tank 10 are formed into the circular-arc shape in the cross-section of, for example, FIG. 4. As described above, the curved-surface portions 12 need not necessarily be formed into the circular-arc shape as long as the curved-surface portions 12 are formed into the shape protruding from the inside to the outside of the water tank 10. Note that, if the curved-surface portions 12 are formed into the circular-arc shape, when water is introduced along the inner surface 10S of the water tank 10, orientations of water currents can be smoothly changed all over the curved-surface portions 12. This can reduce loss due to a decrease in the flow rates of the water currents. Thus, the curved-surface portions 12 are desirably formed into the circular-arc shape in that desired flow rates are easily achieved at positions on the inner surface 10S of the water tank 10.

Incidentally, when the height H of the water tank 10 illustrated in FIG. 4 to FIG. 6 exceeds 500 mm, considering swimming ability of larval fish, these larval fish are unlikely to reach the flat-surface portion 11 (feed arranged on the flat-surface portion 11) from a vicinity of the water surface in the water tank 10. Thus, it is difficult to appropriately rear the larval fish. For example, an amount of feed to be ingested by the larval fish decreases, and hence growth of the larval fish is liable to be delayed. As a result, a survival rate of the larval fish is also liable to decrease.

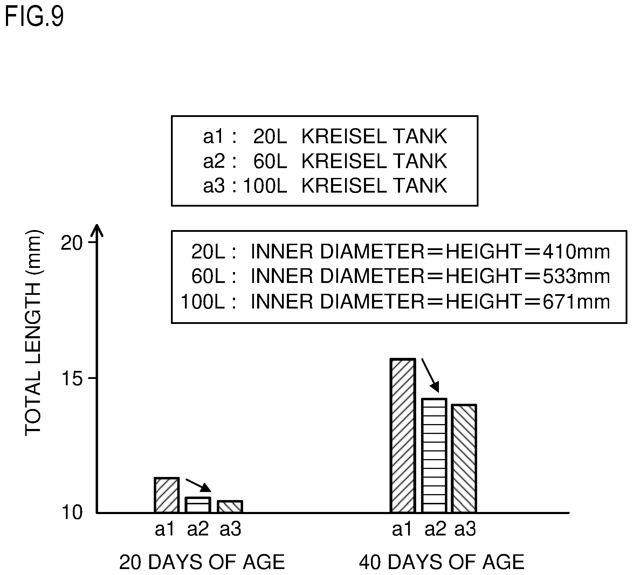

FIG. 9 is a graph schematically showing growth of larval fish (distributions of total lengths of larval fish) by days of age in Kreisel tanks (three different capacities of 20 L, 60 L, and 100 L). Note that, the Kreisel tanks are defined as water tanks each including an opening portion with a width that is shorter than an inner diameter (diameter) of a cylinder in a cross-section when the cylinder is laid on its side and cut in a plane parallel to a direction of its central axis, and a wall portion that circumferentially extends to cover half or more of a circumference of the cylinder.

An inner diameter and a height of the Kreisel tank of 20 L are each 410 mm. An inner diameter and a height of the Kreisel tank of 60 L are each 533 mm. An inner diameter and a height of the Kreisel tank of 100 L are each 671 mm.

Note that, although the water tank 10 according to this embodiment includes the flat-surface portion 11 as described above, in the test shown in FIG. 9, in order to examine only influence of inner diameters (= heights) of the water tanks as influence on the growth of the larval fish, that is, in order to eliminate the influence of the flat-surface portion 11, the Kreisel tanks without the flat-surface portions at their bottom surfaces were assumed.

FIG. 9 reveals that ranges of the total lengths of both the larval fish at 20 days of age and the larval fish at 40 days of age are smaller in the 60-L and the 100-L water tanks each with the height exceeding 500 mm than in the 20-L water tank with the height of 500 mm or less. Thus, the growth of the larval fish decreases. Thus, from a viewpoint of allowing larval fish to easily reach the feed on the bottom surface at the time of feeding so that the larval fish can be appropriately reared, it can be said that the height H of the water tank is desirably 500 mm or less. In other words, the water tank 10 according to this embodiment desirably satisfies the following conditional expression (3). $H \leq 500 mm$ (3)

In particular, from a viewpoint of reliably allowing larval fish to easily reach the feed on the bottom surface at the time of feeding so that the larval fish can be reliably appropriately reared, from FIG. 8, it can be said that the height H of the water tank is desirably 410 mm or less. In other words, the water tank 10 according to this embodiment desirably further satisfies the following conditional expression (3a) $H \leq 410 mm$ (3a)

### [3. Examples]

Next, Examples of the water tank 10 according to this embodiment and Comparative Example are described together. Hereinbelow, with regard to the three water tanks 10 illustrated in FIG. 4 to FIG. 6 and the water tank 10A illustrated in FIG. 7, distributions of water currents in the water tanks (specifically, distributions in cross-sections that are perpendicular to the A direction) were specifically tested through simulations.

First, as illustrated in FIG. 4, the width in the C direction of the flat-surface portion 11 was defined as P (mm), and the water tank 10 with P = 100 mm, W = 460 mm, and H = 370 mm was designed as a water tank according to Example 1. As the radius of curvature R of the curved-surface portion 12 of the water tank 10, R = 230 mm was adopted. In addition, the length in the A direction of the water tank 10 was set to 1500 mm. Note that, the height H (= 370 mm) of the water tank was set in consideration of the height (500 mm or less) at which larval fish can reliably swim downward to ingest feed at the time of feeding.

As illustrated in FIG. 5, the water tank 10 according to Example 2 was designed by changing P and W of the water tank 10 according to Example 1 to P = 200 mm and W = 560 mm without changing other parameters (H, R, and L) from those in Example 1.

As illustrated in FIG. 6, the water tank 10 according to Example 3 was designed by changing P and W of the water tank 10 according to Example 1 to P = 300 mm and W = 660 mm without changing other parameters (H, R, and L) from those in Example 1.

As illustrated in FIG. 7, the water tank 10A according to Comparative Example 1 was designed by changing P and W of the water tank 10 according to Example 1 to P = 400 mm and W = 760 mm without changing other parameters (H, R, and L) from those in Example 1.

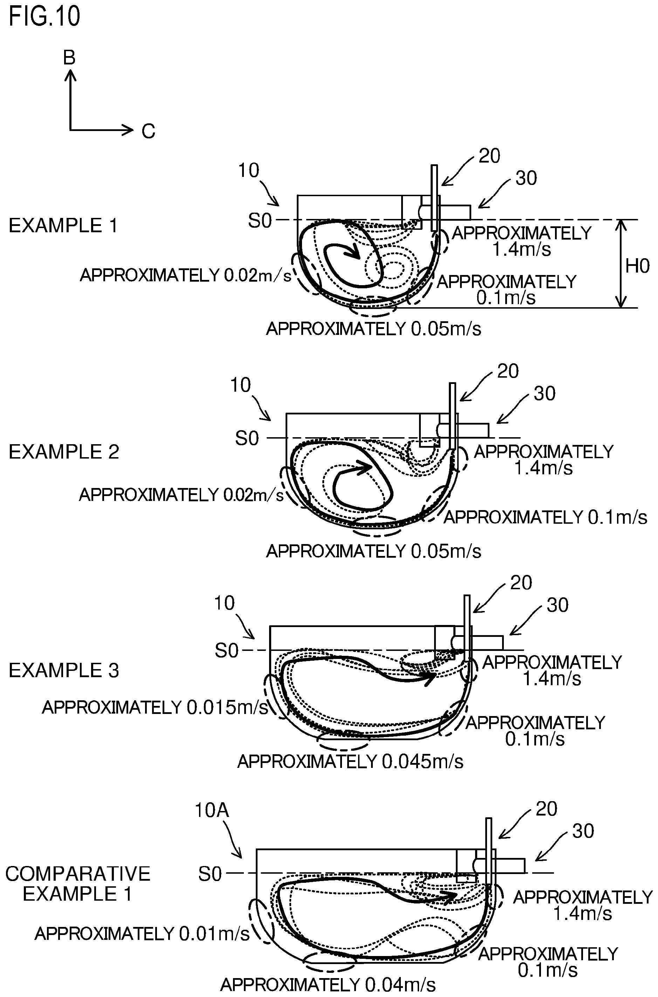

The inlet pipe 21 through which the nine inlet ports 21a were formed at a pitch of 70 mm on the one side and the other side in the A direction from the central portion in the A direction as illustrated in FIG. 2 was assumed as an inlet pipe of the inlet portion 20 that introduces water into the respective water tanks according to Examples 1 to 3 and Comparative Example 1 (water tanks 10 and 10A) (the number of the inlet ports 21a is eighteen.). A diameter of the inlet port 21a was set to 3.5 mm. In addition, a distance D indicated in FIG. 3 under the state in which the water has filled the water tank up to the predetermined capacity by the introduction of the water through the inlet ports 21a of the inlet pipe 21 was set to D = 78 mm. Note that, the distance D is a distance in the B direction from the upper edge of the side-surface portion 13 of the water tank to the position S0 of an initial surface of the water in the water tank (position of the water surface under the state in which the water has filled the water tank 10 up to the predetermined capacity). Note that, when a distance from the bottom surface (flat-surface portion 11) of the water tank 10 to the position S0 is defined as a height H0 of the drainage portion 30 (refer to FIG. 10), H0 = H-D0 = 370-78 = 292 mm is established.

In addition, in the assumed case of the introduction of the water into the water tank, the inlet pipe 21 was located at a position below the position S0 in a vicinity of the side-surface portion on one side of the water tank, seawater was supplied at a rate of 10 L/min to the connection pipe 22, and the seawater was discharged downward through the inlet ports 21a. In this case, the side-surface portion on the one side, the curved-surface portion on the one side, the flat-surface portion, the curved-surface portion on the other side, and the side-surface portion on the other side correspond respectively to the first side-surface portion 13a, the first curved-surface portion 12a, the flat-surface portion 11, the second curved-surface portion 12b, and the second side-surface portion 13b illustrated in FIG. 4 to FIG. 7. In the assumed case, the drainage portions 30 were arranged at the positions which were in a vicinity of the inlet pipe 21 and which are symmetrical with each other relative to the central portion in the A direction of the inlet pipe 21.

In all Examples 1 to 3 and Comparative Example 1, distributions of water currents (flow rates and flow volumes) were analyzed through a multiphase flow analysis using the VOF (Volume of Fluid) method. The VOF method is one of methods of analyzing free-surface flows among those of analyzing gas-liquid multiphase flows. FIG. 10 schematically illustrates distributions of water currents in 40 seconds from starts of introduction of water into the respective water tanks according to Examples 1 to 3 and Comparative Example 1. Note that, FIG. 10 illustrates distributions of water currents in cross-sections that are perpendicular to the longitudinal direction of the water tanks. In FIG. 10, dashed lines represent the water currents, and solid lines represent overall water currents.

Results of the analysis revealed the following. First, in Examples 1 to 3, water flows along the inner surface of the water tank (side-surface portion on the one side, curved-surface portion on the one side, flat-surface portion, curved-surface portion on the other side, and side-surface portion on the other side), and favorable flow fields of the water are generated in the water tanks.

Note that, it has been revealed that, when a bottom-surface flow rate (flow rate of a water current in a vicinity of the flat-surface portion) falls below 0.045 m/s, it is difficult to drive away larval fish from the vicinity of the bottom surface by using the water current, and the larval fish tend to rub their heads against the bottom surface to increase development of their jaw dislocations. In this regard, in Examples 1 to 3, the results of the analysis reveal that bottom-surface flow rates of 0.045 m/s to 0.05 m/s are ensured, which probably reduce a risk of the development of the jaw dislocations of the larval fish. In addition, after feeding, the larval fish swim in the water tanks in mild water currents that flow at 0.05 m/s or less, and hence the larval fish are probably prevented from developing the deformities such as broken spines.

Note that, conditions of the above-described bottom-surface flow rate for reducing the jaw dislocations of the larval fish need to be set in consideration of an entirety of the flat-surface portion, specifically, an entirety from a side where the one end portion of the flat-surface portion is present (side coupled to the curved-surface portion on the one side) to a side where the other end portion of the same is present (side coupled to the curved-surface portion on the other side). Note that, when a flow rate of 0.045 m/s or more is satisfied at an end portion on a water-current downstream side of the flat-surface portion where the flow rate is relatively lower than an end portion on a water-current upstream side of the same, the flow rate of 0.045 m/s or more is satisfied in the entirety of the flat-surface portion. Thus, in the example illustrated in FIG. 10, it is only necessary that the bottom-surface flow rate of 0.045 m/s or more be satisfied at least on the side where the other end portion is present (end portion on the downstream side) of the flat-surface portion.

In contrast, in Comparative Example 1, the bottom-surface flow rate (in particular, a flow rate at the end portion on the downstream side of the flat-surface portion) is 0.04 m/s, which falls below 0.045 m/s as a reference. This is probably because, in Comparative Example 1, the bottom surface of the water tank is excessively wide, and hence water that has flowed along the side-surface portion on the one side does not reach the side-surface portion on the other side via the vicinity of the bottom surface, that is, the water flows at positions away from the bottom surface and the side-surface portion on the other side. In Comparative Example 1, since the bottom-surface flow rate is low, there is a risk that the larval fish remain in the vicinity of the bottom surface even after feeding, and the larval fish are liable to develop their jaw dislocations.

Meanwhile, as described above, when the water current is excessively fast, the larval fish are liable to develop the deformities such as broken spines. In order that appropriate water currents are generated in the water tanks, an upper limit of a flow rate of water that flows along the curved-surface portion on the upstream side relative to the flat-surface portion is desirably 0.1 m/s or less, and further desirably 0.08 m/s or less.

The water tanks according to Examples 1 to 3 satisfy the conditional expressions in the embodiment described hereinabove, and hence the advantages according to the embodiment described hereinabove are highly likely to be achieved.

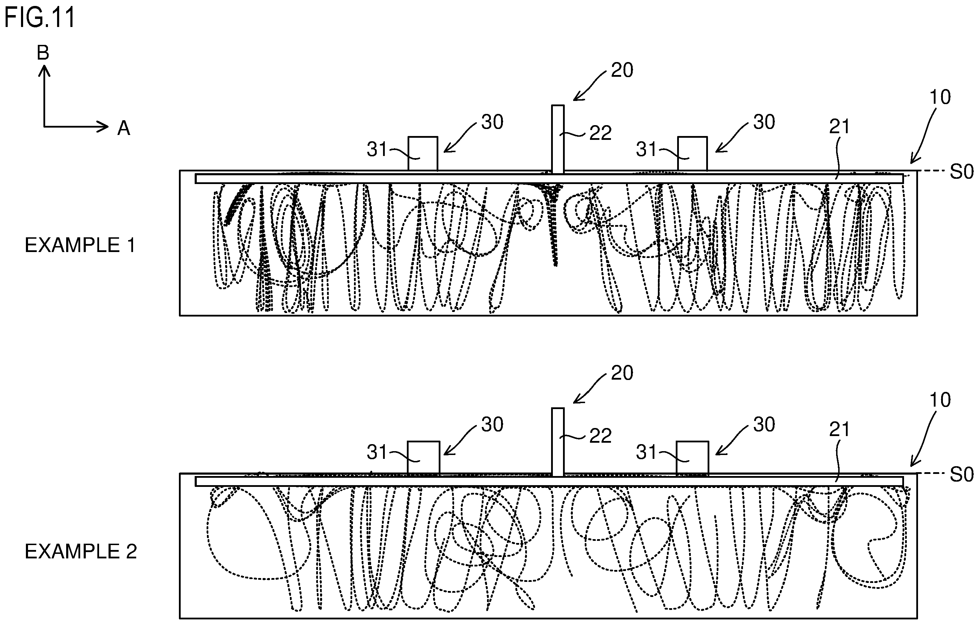

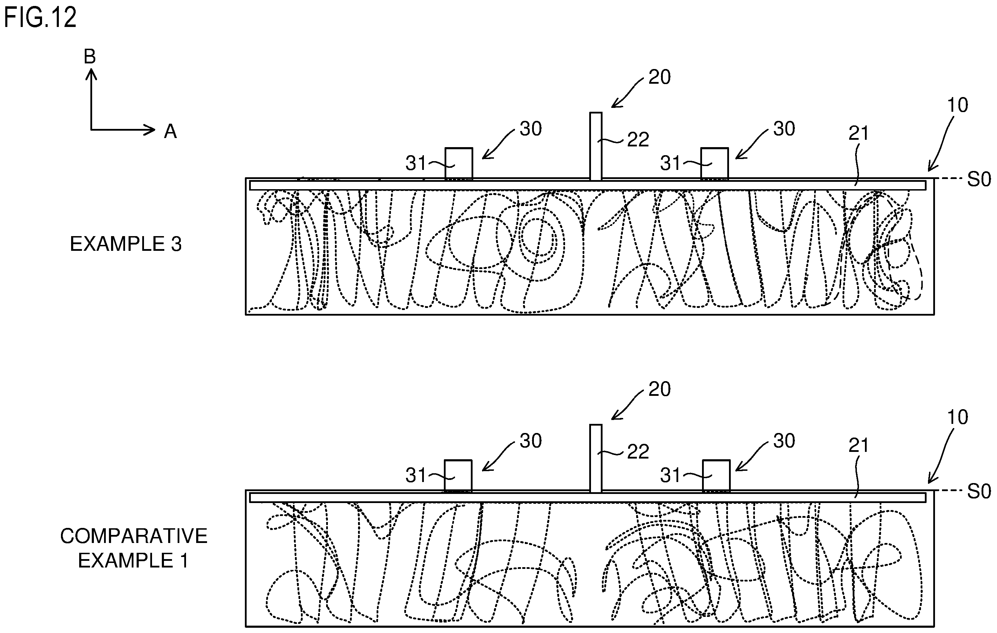

FIG. 11 and FIG. 12 schematically illustrate the distributions of the water currents in the longitudinal direction (A direction) in the respective water tanks according to Examples 1 to 3 and Comparative Example 1. It was revealed that, in all the water tanks, in the longitudinal direction, the distributions were substantially symmetrical relative to the center in the A direction.

### [4. Other Modifications]

The height H0 of the drainage portion 30 need not necessarily be set to 292 mm relative to the water tank 10 with H = 370 mm as in the examples of Examples described hereinabove as long as the height H0 of the drainage portion 30 is equal to or less than the height H of the water tank 10. In this embodiment, as expressed above by the conditional expressions (3) and (3a), H ≤ 500 mm is adopted, and H ≤ 410 mm is desirably adopted. Thus, in conclusion, also with regard to the height H0 of the drainage portion 30, H0 ≤ 500 mm is adopted, and H0 ≤ 410 mm is desirably adopted. In this case, the width W in the lateral direction of the water tank 10 according to the present invention can be rephrased as a width W in the lateral direction of the water surface under the state in which water has filled the water tank 10 up to the predetermined capacity. Further, the height H of the water tank 10 can be rephrased as a height H from the flat-surface portion 11 to the water surface.

Still further, the height H of the water tank 10 is a parameter that defines a volume of the water tank 10 (maximum capacity of water which can be contained). Meanwhile, when the drainage portion 30 is installed at or below the height H of the water tank 10, the height H0 of the drainage portion 30 is another parameter that defines the maximum capacity of the water which can be contained in the water tank 10 . In such a way, both the height H of the water tank 10 and the height H0 of the drainage portion 30 are commonly the parameters that define the maximum capacity of the water which can be contained in the water tank 10. Thus, the above-described conditional expressions (1) and (1a) can be replaced with the following conditional expressions (A) and (B). In other words, $1.12 \leq W / H 0 \leq 1.90$ (A) $1.24 \leq W / H 0 \leq 1.78$ (B) where H0 (mm) is the height of the drainage portion 30 from the flat-surface portion 11 of the water tank 10 are established.

The water tank 10 according to this embodiment satisfies the above-described conditional expression (2), that is, 50 mm ≤ P ≤ 350 mm. In this context, in the water tank 10 according to Example 1, when the width P of the flat-surface portion 11 is changed from 100 mm to 50 mm, the width W of the water tank 10 decreases from 460 mm by 50 mm to 410 mm. In addition, in the water tank 10 according to Example 3, when the width P of the flat-surface portion 11 is changed from 300 mm to 350 mm, the width W of the water tank 10 increases from 660 mm by 50 mm to 710 mm. Thus, a possible range of W of the water tank 10 is 410 mm ≤ W ≤ 710 mm. Therefore, it can also be said that, in terms of a ratio of W/P, the water tank 10 according to this embodiment satisfies the following conditional expression (4). $2.03 \leq W / P \leq 8.20$ (4)

More specifically, it can be said that, on the basis of the values specified in Examples 1 to 3, a desirable range of W/P is a range that satisfies the following conditional expression (4a). $2.20 \leq W / P \leq 4.60$ (4a)

In the water tank 10 illustrated, for example, in FIG. 4, although the first side-surface portion 13a and the second side-surface portion 13b are desirably located parallel to each other as in this embodiment, these side-surface portions need not necessarily be located parallel to each other. For example, the interval in the C direction between the first side-surface portion 13a and the second side-surface portion 13b may slightly increase upward. The interval W in the C direction in this case is defined as a maximum interval between the first side-surface portion 13a and the second side-surface portion 13b (the interval between the upper edges).

### [5. Appendices]

The water tank and the rearing apparatus described in this embodiment can be expressed as follows.

A water tank according to Appendix (1) is a water tank for rearing larval fish. The water tank includes:
a flat-surface portion that expands in a lateral direction;
a pair of curved-surface portions that are coupled to one end portion and another end portion in the lateral direction of the flat-surface portion, and that extend upward while bulging to sides opposite to each other in the lateral direction; and
a pair of side-surface portions that are coupled respectively to the pair of curved-surface portions, and that extend upward,
the water tank satisfying $1.12 \leq W / H \leq 1.90$ (1)
where W (mm) is an interval in the lateral direction between respective upper edges of the pair of side-surface portions, and
where H (mm) is a height from the flat-surface portion to the respective upper edges of the pair of side-surface portions.

A water tank according to Appendix (2) further satisfies, in the water tank according to Appendix (1), $1.24 \leq W / H \leq 1.78$ (1a)

A water tank according to Appendix (3) satisfies, in the water tank according to Appendix (1), $50 mm \leq P \leq 350 mm$ (2) where P (mm) is a width in the lateral direction of the flat-surface portion.

A water tank according to Appendix (4) satisfies, in the water tank according to Appendix (2), $100 mm \leq P \leq 300 mm$ (2a) where P (mm) is a width in the lateral direction of the flat-surface portion.

A water tank according to Appendix (5) satisfies, in the water tank according to any of Appendices (1) to (4), $H \leq 500 mm$ (3)

A water tank according to Appendix (6) further satisfies, in the water tank according to Appendix (5), $H \leq 410 mm$ (3a)

A water tank according to Appendix (7) has, in the water tank according to any of Appendices (1) to (6), an elongated shape in a direction that is perpendicular to a cross-section taken along a normal direction of the flat-surface portion and along the lateral direction.

In a water tank according to Appendix (8), in the water tank according to any of Appendices (1) to (7), the pair of curved-surface portions are each formed into a circular-arc shape.

An apparatus for rearing larval fish according to Appendix (9) includes:
the water tank according to any of Appendices (1) to (8);
an inlet portion that is configured to introduce water into the water tank; and
a drainage portion that is configured to drain the water which has been introduced into the water tank and has exceeded a predetermined capacity of the water tank.

An apparatus for rearing larval fish according to Appendix (10) is the apparatus for rearing larval fish according to Appendix (9), and satisfies, instead of the expression (1), $1.12 \leq W / H 0 \leq 1.90$ (A) where H0 (mm) is a height of the drainage portion from the flat-surface portion.

The apparatus for rearing larval fish according to Appendix (10) can also be rephrased as follows. Specifically, the apparatus for rearing larval fish according to Appendix (10) includes:
a water tank;
an inlet portion that is configured to introduce water into the water tank; and
a drainage portion that is configured to drain the water which has been introduced into the water tank and has exceeded a predetermined capacity of the water tank,
the water tank including
   a flat-surface portion that expands in a lateral direction,
   a pair of curved-surface portions that are coupled to one end portion and another end portion in the lateral direction of the flat-surface portion, and that extend upward while bulging to sides opposite to each other in the lateral direction, and
   a pair of side-surface portions that are coupled respectively to the pair of curved-surface portions, and that extend upward,
the water tank satisfying $1.12 \leq W / H 0 \leq 1.90$ (A)
where W (mm) is an interval in the lateral direction between respective upper edges of the pair of side-surface portions, and
where H0 (mm) is a height of the drainage portion from the flat-surface portion.

The apparatus for rearing larval fish according to Appendix (10) desirably satisfies $1.24 \leq W / H 0 \leq 1.78$ (B)

An apparatus for rearing larval fish according to Appendix (11) includes:
the water tank according to Appendix (7);
an inlet portion that is configured to introduce water into the water tank; and
a drainage portion that is configured to drain the water which has been introduced into the water tank and has exceeded a predetermined capacity of the water tank,
the inlet portion including an inlet pipe that extends in a longitudinal direction of the water tank,
the inlet pipe including a plurality of inlet ports that are formed in a row in the longitudinal direction,
the drainage portion including drainage portions that are fewer in number than the plurality of inlet ports and are arranged side by side in the longitudinal direction.

In an apparatus for rearing larval fish according to Appendix (12), in the apparatus for rearing larval fish according to Appendix (11),
the plurality of inlet ports and the drainage portions are arranged in symmetry in the longitudinal direction relative to a central portion in the longitudinal direction.

The scope of the present invention is not limited to the above-described embodiment of the present invention, and may be embodied with extensions or modifications without departing from the gist of the invention.

### Industrial Applicability

The water tank for rearing larval fish according to the present invention can be utilized, for example, for rearing larvae of eels.

### Reference Signs List

- 10: water tank
- 11: flat-surface portion
- 11a: one end portion
- 11b: another end portion
- 12: curved-surface portion
- 12a: first curved-surface portion (one of pair of curved-surface portions)
- 12b: second curved-surface portion (another one of pair of curved-surface portions)
- 13: side-surface portion
- 13a: first side-surface portion (one of pair of side-surface portions)
- 13b: second side-surface portion (another one of pair of side-surface portions)
- 20: inlet portion
- 21: inlet pipe
- 21a: inlet port
- 30: drainage portion
- 100: rearing apparatus
- A: longitudinal direction
- B: lateral direction
- H: height of side-surface portion
- H0: height of drainage portion
- P: width
- W: interval

## Claims

1. A water tank for rearing larval fish, the water tank comprising:
a flat-surface portion that expands in a lateral direction;
a pair of curved-surface portions that are coupled to one end portion and another end portion in the lateral direction of the flat-surface portion, and that extend upward while bulging to sides opposite to each other in the lateral direction; and
a pair of side-surface portions that are coupled respectively to the pair of curved-surface portions, and that extend upward,
the water tank satisfying $1.12 \leq W / H \leq 1.90$ (1)
where W (mm) is an interval in the lateral direction between respective upper edges of the pair of side-surface portions, and
where H (mm) is a height from the flat-surface portion to the respective upper edges of the pair of side-surface portions.

2. The water tank according to Claim 1, wherein the water tank further satisfies $1.24 \leq W / H \leq 1.78$ (1a)

3. The water tank according to Claim 1, wherein the water tank satisfies $50 mm \leq P \leq 350 mm$ (2) where P (mm) is a width in the lateral direction of the flat-surface portion.

4. The water tank according to Claim 2, wherein the water tank satisfies $100 mm \leq P \leq 300 mm$ (2a) where P (mm) is a width in the lateral direction of the flat-surface portion.

5. The water tank according to Claim 1, wherein the water tank satisfies $H \leq 500 mm$ (3)

6. The water tank according to Claim 5, wherein the water tank further satisfies $H \leq 410 mm$ (3a)

7. The water tank according to Claim 1, wherein the water tank has an elongated shape in a direction that is perpendicular to a cross-section taken along a normal direction of the flat-surface portion and along the lateral direction.

8. The water tank according to Claim 1, wherein the pair of curved-surface portions are each formed into a circular-arc shape.

9. An apparatus for rearing larval fish, the apparatus comprising:
the water tank according to any one of Claims 1 to 8;
an inlet portion that is configured to introduce water into the water tank; and
a drainage portion that is configured to drain the water which has been introduced into the water tank and has exceeded a predetermined capacity of the water tank.

10. The apparatus for rearing larval fish according to Claim 9, wherein the apparatus satisfies, instead of the expression (1), $1.12 \leq W / H 0 \leq 1.90$ (A) where H0 (mm) is a height of the drainage portion from the flat-surface portion.

11. An apparatus for rearing larval fish, the apparatus comprising:
the water tank according to Claim 7;
an inlet portion that is configured to introduce water into the water tank; and
a drainage portion that is configured to drain the water which has been introduced into the water tank and has exceeded a predetermined capacity of the water tank,
the inlet portion including an inlet pipe that extends in a longitudinal direction of the water tank,
the inlet pipe including a plurality of inlet ports that are formed in a row in the longitudinal direction,
the drainage portion including drainage portions that are fewer in number than the plurality of inlet ports and are arranged side by side in the longitudinal direction.

12. The apparatus for rearing larval fish according to Claim 11, wherein the plurality of inlet ports and the drainage portions are arranged in symmetry in the longitudinal direction relative to a central portion in the longitudinal direction.
